# EUROPEAN PATENT APPLICATION

(11) **EP 3 729 956 A1**
(43) Date of publication of application: **28.10.2020**
(21) Application number: 19187084.9
(22) Date of filing: 18.07.2019
(51) Int. Cl.: A01G 13/02, A01G 13/04

(54) **PLANT CULTIVATING APPARATUS**

(30) Priority: 22.04.2019 CN 201910321642
(71) Applicant: He, Zhiyi, Shenzhen, Guangdong 518036 (CN)
(72) Inventor: He, Zhiyi, Shenzhen, Guangdong 518036 (CN)
(74) Representative: D'Halleweyn, Nele Veerle Trees Gertrudis

(57) **Abstract**

A plant cultivating apparatus, comprising: an elastic housing (10) having an inner cavity (101), the elastic housing (10) being provided with first and second openings at upper and lower ends thereof in communication with the inner cavity (101); a top structure (20) provided at the upper end of the elastic housing (10) to close the first opening; a bottom structure (30) provided at the lower end of the elastic housing (10) to close the second opening and configured to hold a root of a plant; and a lifting structure (40) provided between the top structure (20) and the bottom structure (30), the lifting structure (40) being capable of stretching and compressing in a vertical direction, thus driving the top structure (20) to move up or down with respect to the bottom structure (30).

## Description

### TECHNICAL FIELD

The present disclosure relates to a plant cultivating apparatus.

### BACKGROUND

With the development of society and the improvement of people's living standard, plant cultivating apparatus has been paid more and more attention as a new home appliance. Generally, the plant cultivating apparatus provides a closed space for a plant to grow, and the environment required for the plant to grow is provided by controlling the water, air, nutrients, light, temperature, humidity, etc. in the closed space in real time.

However, the conventional plant cultivating apparatus is large in volume and therefore occupies a large space.

### SUMMARY

A plant cultivating apparatus is provided to improve the defects that the traditional plant cultivating apparatus occupies a large space.

A plant cultivating apparatus includes: an elastic housing having an inner cavity, the elastic housing being provided with first and second openings at upper and lower ends thereof in communication with the inner cavity; a top structure provided at the upper end of the elastic housing to close the first opening; a bottom structure provided at the lower end of the elastic housing to close the second opening and configured to hold a root of a plant; and a lifting structure provided between the top structure and the bottom structure, the lifting structure being capable of stretching and compressing in the vertical direction, thus driving the top structure to move up or down with respect to the bottom structure.

In one of the embodiments, the lifting structure includes a telescopic frame located between the top structure and the bottom structure and a driving assembly configured to drive the telescopic frame to stretch and compress in the vertical direction.

In one of the embodiments, the telescopic frame includes a plurality of first connecting rods and a plurality of second connecting rods, the plurality of first connecting rods being parallel to and spaced apart with each other and located in a first plane, the plurality of second connecting rods being parallel to and spaced apart with each other and located in a second plane, each first connecting rod and each second connecting rod being intersected and hinged to each other.

In one of the embodiments, top ends of the first connecting rod and the second connecting rod are movably connected to the top structure and are capable of moving adjacent to or away from each other; bottom ends of the first connecting rod and the second connecting rod are movably connected to the bottom structure and are capable of moving adjacent to or away from each other.

In one of the embodiments, the telescopic frame further includes a first rail and two first sliders, the first rail is provided on the top structure, two first sliders are slidably located on the first rail, and the two first sliders are hinged to the top ends of the first connecting rod and the second connecting rod, respectively;

the telescopic frame further includes a second rail and two second sliders, the second rail is provided on the bottom structure, two second sliders are slidably located on the second rail, and the two second sliders are hinged to the bottom ends of the first connecting rod and the second connecting rod, respectively.

In one of the embodiments, the driving assembly is connected to the top ends of the first connecting rod and the second connecting rod and capable of driving the first connecting rod and the second connecting rod to move adjacent to or away from each other.

In one of the embodiments, the driving assembly is connected to the bottom ends of the first connecting rod and the second connecting rod and capable of driving the first connecting rod and the second connecting rod to move adjacent to or away from each other.

In one of the embodiments, one of the driving assemblies is connected to the top ends of the first connecting rod and the second connecting rod and capable of driving the first connecting rod and the second connecting rod to move adjacent to or away from each other; the other of the driving assemblies is connected to the bottom ends of the first connecting rod and the second connecting rod and capable of driving the first connecting rod and the second connecting rod to move adjacent to or away from each other.

In one of the embodiments, the driving assembly includes:
a screw rotatably connected to the top structure, the screw being parallel to the first rail, the screw being provided with two external threads with opposite helical directions;
a driving member mounted on the top structure and configured to drive the screw to rotate; and
two engaging members movably sleeved on the screw and engaged with the two external threads, respectively, and the two engaging members are fixed to the two first sliders, respectively.

In one of the embodiments, the telescopic frame further includes a first reinforcing rod and a second reinforcing rod, the first reinforcing rod being parallel to the first connecting rod, and the second reinforcing rod being parallel to the second connecting rod;
one end of the first reinforcing rod and one end of the second reinforcing rod are hinged and connected to the first rail, the first reinforcing rod being intersected with and hinged to the corresponding second connecting rod, and the second reinforcing rod being intersected with and hinged to the corresponding first connecting rod.

In one of the embodiments, the telescopic frame further includes a third reinforcing rod and a fourth reinforcing rod, the third reinforcing rod being parallel to the first connecting rod, and the fourth reinforcing rod being parallel to the second connecting rod;
one end of the third reinforcing rod and one end of the fourth reinforcing rod are hinged and connected to the second rail, the third reinforcing rod being intersected with and hinged to the corresponding second connecting rod, and the fourth reinforcing rod being intersected with and hinged to the corresponding first connecting rod.

In one of the embodiments, the top structure includes: a main body portion provided at the upper end of the elastic housing;
a distance sensor provided at a side of the main body portion facing the bottom structure and configured to detect a distance between the plant and the main body portion; and
a control unit electrically coupled to the distance sensor and the lifting structure, respectively, and configured to control the lifting structure to stretch and compress according to the distance detected by the distance sensor.

In one of the embodiments, the top structure further includes a lamp located on a side of the main body portion facing the bottom structure, the lamp being configured to provide light to the plant.

In one of the embodiments, the elastic housing extends vertical along a wavy line or a fold line in the vertical direction.

In one of the embodiments, the elastic housing includes a plurality of sliding sleeves that are sleeved successively, and two adjacent sliding sleeves being slidably connected to each other in the vertical direction, an innermost sliding sleeve is fixed to one of the top structure and the bottom structure, and an outermost sliding sleeve is fixed to the other one of the top structure and the bottom structure.

In one of the embodiments, the plant cultivating apparatus further include a first mounting flange on the first opening, the first mounting flange being detachably fastened to the top structure.

The above-described plant cultivating apparatus closes the first opening of the elastic housing by the top structure, and the bottom structure closes the second opening of the elastic housing, and is then supported between the top structure and the bottom structure by the lifting structure to form the closed space for plant growth. In practical use, the plant is cultivated on the bottom structure, and the height of the top structure relative to the bottom structure (i.e., the height of the plant cultivating apparatus) can be adjusted by adjusting the stretching and compression of the lifting structure according to the height of the plant in the growth process of the plant, to ensure that the most economical space is provided in the growth process of the plant. Thus, the space occupied by the plant cultivating apparatus is reduced compared with the prior art plant cultivating apparatus having a fixed outer dimension.

### BRIEF DESCRIPTION OF THE DRAWINGS

FIG. 1 is a schematic view of a plant cultivating apparatus in a compressed state according to an embodiment.
FIG. 2 is a schematic view of the plant cultivating apparatus of FIG. 1 in a stretched state.
FIG. 3 is a schematic view of the plant cultivating apparatus according to another embodiment.
FIG. 4 is a side view of a telescopic frame of the plant cultivating apparatus of FIG. 3.
FIG. 5 is a top view of a driving assembly of the plant cultivating apparatus of FIG. 3.
FIG. 6 is a block diagram of a control unit of the plant cultivating apparatus of FIG. 1.
FIG. 7 is an enlarged view of a portion A of FIG. 3.
FIG. 8 is an enlarged view of a portion B of FIG. 3.
FIG. 9 is a cross-sectional view of an elastic housing of a plant cultivating apparatus according to another embodiment.

### DETAILED DESCRIPTION OF THE EMBODIMENTS

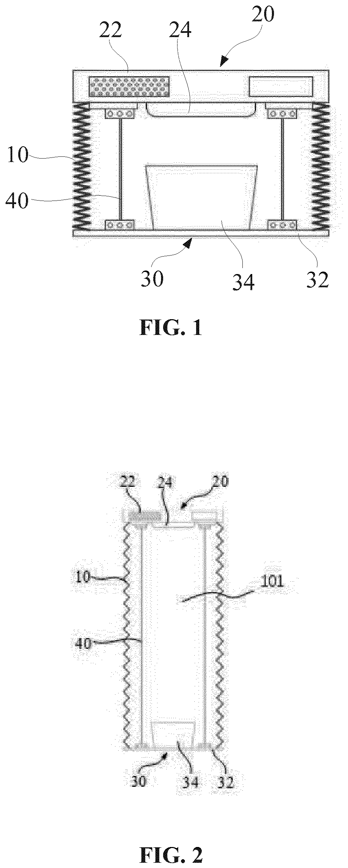

Referring to FIGS. 1 to 3, a plant cultivating apparatus according to an embodiment includes an elastic housing 10, a top structure 20, a bottom structure 30, and a lifting structure 40.

The elastic housing 10 is substantially cylindrical and includes an inner cavity 101. The elastic housing 10 is provided with first and second openings at upper and lower ends thereof in communication with the inner cavity 101. The top structure 20 is provided at the upper end of the elastic housing 10 to close the first opening. The bottom structure 30 is provided at the lower end of the elastic housing 10 to close the second opening. The bottom structure 30 is used to hold a root of a plant.

The lifting structure 40 is provided between the top structure 20 and the bottom structure 30. The lifting structure 40 is capable of stretching and compressing in the vertical direction, thus driving the top structure 20 to move up or down with respect to the bottom structure 30.

A closed space is formed between the top structure 20 and the bottom structure 30 for the plant to grow. In practical use, plants are cultivated on the bottom structure 30. In the process of the growth of the plant, the height of the top structure 20 relative to the bottom structure 30 is adjusted according to the height of the plant by adjusting the stretching and compression of the lift structure 40. In other words, if the height of the plants continuously increases, the lifting structure 40 can be extended continuously, so that the height of the elastic housing 10 also continuously increases, which ensures that the plant cultivating apparatus provide the most economical space for the plant to grow. Accordingly, compared with the conventional plant cultivating apparatus with fixed height, the space utilization ratio is improved and the space occupied by the plant cultivating apparatus is reduced, and the energy consumption for regulating the temperature, light, humidity, etc. is saved.

It should be noted that, the height between the top structure 20 and the bottom structure 30 can be adjusted to an appropriate height according to the type of the plant. For example, if a higher plant is planted, the height between the top structure 20 and the bottom structure 30 can be increased; if a lower plant is planted, the height between the top structure 20 and the bottom structure 30 can be decreased. Thus, on the premise of providing necessary space for the growth of the plant, the utilization ratio of the space is improved, and the space occupied by the plant cultivating apparatus is reduced, the dynamic growth of the plant is also displayed to the user, and the interaction is enhanced.

Referring also to FIGS. 1, 2, 3 and 6, in one of the embodiments, the top structure 20 includes a main body portion 22, a distance sensor 81, and a control unit 80. The main body portion 22 is provided at the upper end of the elastic housing 10 for closing the first opening. The distance sensor 81 is provided at a side of the main body portion 22 facing the bottom structure 30 for detecting the distance between the plant and the main body portion 22. The control unit 80 is provided at the main body portion 22 and electrically coupled to the distance sensor 81 and the lifting structure 40, respectively. The control unit 80 can control stretching and compression of the lifting structure 40 according to the current distance between the plant and the main body portion detected by the distance sensor 81, so that the distance between the main body portion 22 and the plant is maintained at a preset range. Accordingly, the lifting structure 40 can automatically stretch and compress according to growth of the plant and adjust the height of the plant cultivating apparatus. In one of the embodiments, the control unit 80 can be a control circuit board.

It should be noted that, in one of the embodiments, the top structure 20 is further provided with a user interface 88 electrically coupled to the control unit 80. As such, an external equipment, such as a mobile phone, can be connected to the control unit 80 through the user interface 88, thus facilitating the data transmission, and enhancing the interaction between the user and the plant cultivating apparatus.

In one of the embodiments, the top structure 20 further includes an air intake pump 82 and an air exhaust pump 84. The air intake pump 82 is mounted to the main body portion 22 to supply air into the inner cavity 101. The air exhaust pump 84 is mounted to the main body portion 22 to exhaust air from the inner cavity 101. As such, an air circulation can be formed by the air intake pump 82 and the air exhaust pump 84 to provide a necessary air environment for the plant to grow. Specifically, an air filter is connected to the air outlet of the air exhaust pump 84, so that the toxic air or air with peculiar smell can be prevented from being discharged.

Specifically, in one of the embodiments, the main body portion 22 can be a box, the control unit 80, the air intake pump 82, and the air exhaust pump 84 can be received in the box, thereby facilitating protection of the control unit 80, the air intake pump 82 and the air exhaust pump 84.

In one of the embodiments, the top structure 20 also includes a camera mounted to the side of the body portion 22 facing the bottom structure 30. In this way, the plant can be photographed by the camera to record the growth of plants.

In one of the embodiments, the top structure 20 also includes a lamp 24 mounted to the side of the body portion 22 facing the bottom structure 30 for providing light to the plants. As such, in the growth process of the plant, since the height of the top structure 20 relative to the bottom structure 30 can be adjusted according to growth of the plant, the required light can be provided at the shortest distance from the plant, energy consumption is greatly saved.

Specifically, the lamp 24 is electrically coupled to the control unit 80, so that the light intensity of the lamp 24 can be controlled by the control unit 80, and energy consumption is further saved.

In one of the embodiments, the bottom structure 30 includes a base 32, a cultivating tank 34, and a plant fixing bracket. The base 32 is provided at a bottom portion of the elastic housing 10 to close the second opening. The cultivating tank 34 is fixedly mounted on a side of the base 32 facing the top structure 20 for containing cultivating liquid for cultivating the plants. The plant fixing bracket is fixedly mounted to the cultivating tank 34 for fixing the plant in the cultivating tank 34.

Specifically, in one of the embodiments, the bottom structure 30 includes a bubble generating device 83 mounted to the base 32. An air inlet of the bubble generating device 83 is in communication with the air outlet of the air inlet pump through a hose, and the air outlet of the bubble generating device 83 is in communication with the cultivating liquid of the cultivating tank 34. In this way, the bubble generating device 83 is mainly used to increase oxygen for the cultivating liquid in the cultivating tank 34 to prevent oxygen deficiency of the root of the plant.

Specifically, in one of the embodiments, the base 32 is further provided with a nutrient solution injection port and a regulating liquid injection port, and the nutrient solution injection port and the regulating liquid injection port are respectively in communication with the cultivating tank 34 through pipes. It will be appreciated that the base 32 is also provided with a water inlet and outlet therethrough. The bottom structure 30 further includes a water pump 87 fixedly mounted to the base 32 and communicating between the water inlet and outlet and the cultivating tank 34 for discharging the liquid in the cultivating tank 34 or injecting water into the cultivating tank 34.

Specifically, in one of the embodiments, the bottom structure 30 further includes a temperature control device 86 and a humidity control device 85 mounted on the base 32. The temperature control device 86 and the humidity control device 85 are respectively used to regulate the temperature and humidity of the inner cavity 101 to provide a favorable growing environment for the plants.

It will be appreciated that, in one of the embodiments, the bubble generating device 83, the water pump 87, the temperature control device 86, and the humidity control device 85 can all be electrically coupled to the control unit 80 and controlled by the control unit 80.

In one of the embodiments, the elastic housing 10 extends along a wavy line or a fold line in the vertical direction, so that the elastic housing 10 is foldable, which increases the flexibility of the elastic housing 10 in the vertical direction. More specifically, the elastic housing 10 is provided with an accordion-like folded shape.

Specifically, in one of the embodiments, the elastic housing 10 includes a film and a plurality of reinforcing members embedded therein. The reinforcing members are spaced apart in the vertical direction, and the longitudinal direction of each reinforcing member is perpendicular to the vertical direction. Thus, the arrangement of the reinforcing member enhances the strength of the elastic housing 10 so as to have a certain impact resistance without affecting the scalability of the film in the vertical direction, so that the plants in the elastic housing 10 can be better protected. Alternatively, the reinforcing member can be a plastic piece.

Alternatively, the material of the film can be at least one of rubber, silica gel, thermoplastic elastomer (TPR), thermoplastic polyurethane elastomer (TPU), polyurethane material (PU), canvas, or the like.

Specifically, in one of the embodiments, the cross-sectional shape of the elastic housing 10 can be square, circular, oval, or shaped, or the like, and is not limited thereto.

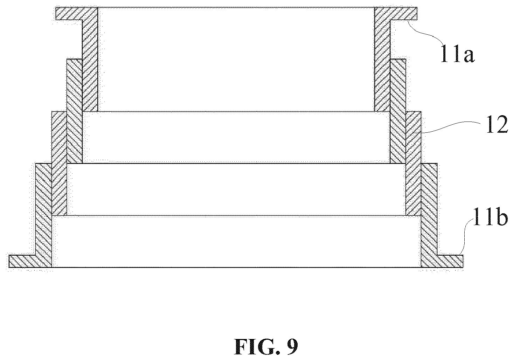

Referring to FIG. 9, in another embodiment, the elastic housing 10 includes a plurality of sliding sleeves 12, and two adjacent sliding sleeves 13 are relatively slidably connected in the vertical direction. The innermost sliding sleeve 12 is fixedly connected to the top structure 20, and the outermost sliding sleeve 12 is fixedly connected to the bottom structure 30. Thus, when the lifting structure 40 stretches and compress in the vertical direction, the adjacent two sliding sleeves 12 can slide relatively in the vertical direction, so that the height of the elastic housing 10 in the vertical direction can be adjusted. Specifically, the cross-sectional shape of the sliding sleeve 12 can be any shape such as a circle, a square, a rectangle, or the like, and is not limited thereto.

In order to allow the adjacent two sliding sleeves 12 to slide relatively in the vertical direction, a sliding structure can be provided between the adjacent sliding sleeves 12. In one of the embodiments, the slide structure can include a slide rail and a slide slot. The slide rail and the slide slot are respectively arranged on two adjacent sliding sleeves, and the slide rail is slidably fitted in the slide slot. It should be noted that the sliding structure is not limited to this, and in other embodiments, other types of sliding structures can be used, and are not limited here.

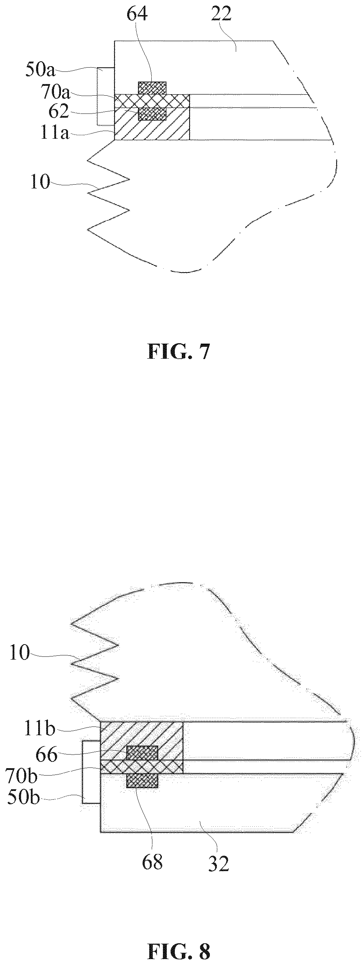

Referring to FIG. 7 and FIG. 9, in the illustrated embodiment, the first opening is provided with a first mounting flange 11a, which is detachably fastened to the top structure 20, such that the top structure 20 can close the first opening. In this way, the first mounting flange 11a and the main body portion 22 are detachably fastened to facilitate the disassembly and removal of the plants in the plant cultivating apparatus. More specifically, the first mounting flange 11a is detachably fastened to the main body portion 22.

Specifically, in one of the embodiments, the plant cultivating apparatus further includes a first latch 50a fixedly mounted to the main body portion 22 for fastening the first mounting flange 11a to the main body portion 22. Thus, the assembly and disassembly of the first mounting flange 11a and the main body portion 22 by means of a latch is simple, fast and reliable without the use of an additional tool. It is understood that a plurality of first latches 50a can be provided. The plurality of first latches 50a can be circumferentially arranged on the main body portion 22, thereby making the fastening of the first mounting flange 11a and the main body portion 22 more stable and reliable.

Specifically, in one of the embodiments, the first mounting flange 11a is provided with a plurality of first magnets 62 in the circumferential direction, and the side of the main body portion 22 facing the elastic housing 10 is also provided with a plurality of second magnets 64 corresponding to the first magnets 62 respectively. Each of the first magnets 62 can be attracted by a corresponding second magnet 64. Thus, the arrangement of the first magnet 62 and the second magnet 64 prevents the elastic housing 10 from falling when the first mounting flange 11a has not been locked with the main body portion 22. Also, the first mounting flange 11a and the main body portion 22 can be positioned by attraction engagement of the first magnet 62 and the second magnet 64 at the time of mounting. Alternatively, the first magnet 62 and the second magnet 64 can be permanent magnets.

Specifically, in one of the embodiments, the plant cultivating apparatus further includes a first sealing strip 70a sandwiched between the first mounting flange 11a and the main body portion 22. In this way, the first mounting flange 11a is fastened to the main body portion 22, thereby pressing the first sealing strip 70a, thereby sealing the gap between the first mounting flange 11a and the main body portion 22.

The elastic housing 10 can be connected to the top structure 20 and the bottom structure 30 in a similar manner. Referring to FIGS. 8 and 9, in one of the embodiments, the second opening is provided with a second mounting flange 11b. The second mounting flange 11b is detachably fastened to the bottom structure 30 so that the bottom structure 30 closes the second opening. In this way, the second mounting flange 11b is detachably fastened to the bottom structure 30 for easy disassembly. More specifically, the second mounting flange 11b is detachably fastened to the base 32 of the bottom structure 30.

Specifically, in one of the embodiments, the plant cultivating apparatus further includes a second lock 50b fixedly mounted to the base 32 for fastening the second mounting flange 11b to the base 32. Thus, the locking and disassembly operation of the second mounting flange 11b and the base 32 by means of the latch is simple, fast and reliable without the aid of additional tools. It is understood that a plurality of second latches 50b can be provided, and the plurality of second latches 50b are spaced apart along the circumferential direction of the base 32, thereby making the fastening of the second mounting flange 11b and the base 32 more stable and reliable.

Specifically, in one of the embodiments, the second mounting flange 11b is provided with a plurality of third magnets 66 in the circumferential direction, and the side of the base 32 facing the elastic housing 10 is also provided with a plurality of fourth magnets 68 corresponding to the third magnets 66 respectively. Each of the third magnets 66 can be attracted by the corresponding fourth magnet 68 so that the second mounting flange 11b and the base 32 can be positioned by the suction of the third magnet 66 and the fourth magnet 68 at the time of mounting. Alternatively, the third magnet 66 and the fourth magnet 68 can be permanent magnets.

Specifically, in one of the embodiments, the plant cultivating apparatus further includes a second sealing strip 70b sandwiched between the second mounting flange 11b and the base 32. Thus, the second mounting flange 11b is fastened to the base 32 so as to squeeze the second sealing strip 70b, thereby sealing the gap between the second mounting flange 11b and the base 32.

It is understood that the first latch 50a and the second latch 50b can be the same or different. The types of locking device is not limited here, as long as it can play the role of locking and fixing. For example, the first latch 50a and the second latch 50b can be buckles.

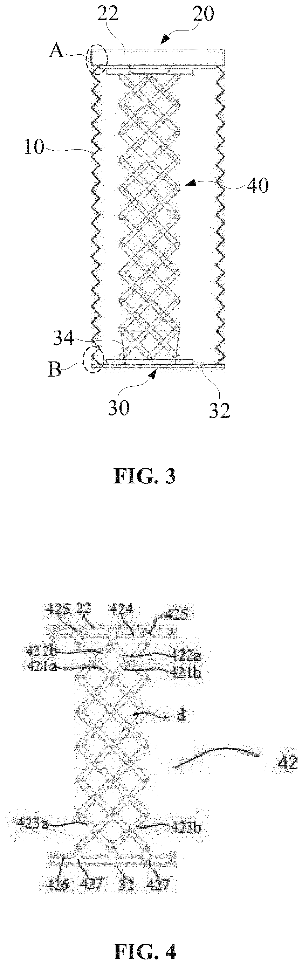

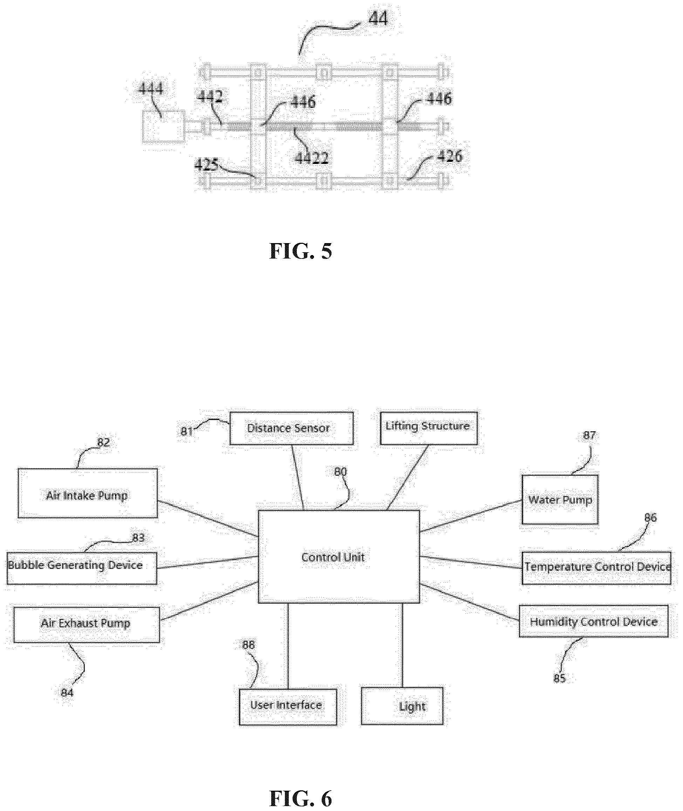

Referring to FIGS. 4 and 5, in one of the embodiments, the lifting structure 40 includes a driving assembly 44 and a telescopic frame 42. The telescopic frame 42 is located between the top structure 20 and the bottom structure 30. The driving assembly 44 is drivingly connected to the telescopic frame 42 for driving the telescopic frame 42 to stretch and compress in the vertical direction. It will be appreciated that the lifting structure 40 is received in the inner cavity 101.

In some embodiments, the telescopic frame 42 includes a plurality of mutually parallel and spaced apart first connected rods 421a located in a first plane and a plurality of mutually parallel and spaced apart second connecting rods 421b located in a second plane. The first plane is parallel to the second plane. The first connecting rod 421a and the second connecting rod 421b are intersected and are hinged to each other. Thus, two adjacent first connecting rods 421a and two second connecting rods 421b are hinged to form a diamond space d. Thus, by driving the corresponding first connecting rods 421a and the second connecting rods 421b to open or close to change the shape of the diamond space d, the telescopic frame 42 is stretched and compressed in the vertical direction. It is understood that the plurality of first connecting rods 421a are arranged at equal intervals. The plurality of second connecting rods 421b are arranged at equal intervals.

Specifically, in one of the embodiments, the top ends of the first connecting rod 421a and the second connecting rod 421b are movably connected to the top structure and are capable of moving adjacent to or away from each other. In this way, the stretching and compression of the telescopic frame 42 can be implemented without interference.

The bottom ends of the first connecting rod 421a and the second connecting rod 421b are movably connected to the bottom structure and are capable of moving adjacent to or away from each other. In this way, the stretching and compression of the telescopic frame 42 can be implemented without interference.

Specifically, in one of the embodiments, the telescopic frame 42 further includes a first rail 424 and two first sliders 425. The first rail 424 is provided at the top structure 20 parallel to the first plane. Two first sliders 425 are slidably fitting the first rail 424, and the two first sliders 425 are hinged to the top ends of the first connecting rod 421a and the second connecting rod 421b at the top of the telescopic frame 42, respectively. As such, by the sliding engagement of the first slider 425 with the first rail 424, the first and second connecting rods 421a and 421b are movably connected to the top structure and are capable of moving adjacent to or away from each other. Alternatively, the first rail 424 is a shaft, and the first slider 425 is provided with a fitting hole slidably fitting the first rail 424, and the first rail 424 extends through the fitting hole so that the first slider 425 can slide along the first rail 424.

The telescopic frame 42 further includes a second rail 426 and two second sliders 427. The second rail 426 is provided at the bottom structure 30 parallel to the first plane. Two second sliders 427 are slidably fitting the second rail 426, and the two second sliders 427 are hinged to the bottom ends of the first connecting rod 421a and the second connecting rod 421b at the bottom of the telescopic frame 42, respectively. As such, by the sliding engagement of the second slider 427 with the second rail 426, the first and second connecting rods 421a and 421b are movably connected to the top structure and are capable of moving adjacent to or away from each other. It is understood that the first rail 424 is parallel to the second rail 426 and is perpendicular to the vertical direction respectively. Alternatively, the second rail 426 is a shaft, and the second slider 427 is provided with a fitting hole slidably fitting the second rail 426, and the first rail 424 extends through the fitting hole so that the second slider 427 can slide along the second rail 426.

In one of the embodiments, the driving assembly 44 is drivingly connected to the top end of the first connecting rod 421a and the second connecting rod 421b, respectively, so as to drive them to move adjacent to or away from each other. In this way, under the driving of the driving assembly 44, the stretching and compression of the telescopic frame 42 in the vertical direction can be realized.

Specifically, the driving assembly 44 includes a screw 442, a driving member 444, and two engaging members 446. The screw 442 is rotatably connected to the top structure 20 and is parallel to the first rail 424. The driving member 444 is mounted to the top structure 20 and is drivingly connected to the screw 442 for driving the screw 442 to rotate about an axis.

The screw 442 is provided with two external threads 4422 with opposite helical directions. Two engaging members 446 movably are sleeved on the screw 442 and engaged with the two external threads 4422, respectively, and the two engaging members 446 are fixed to the two second sliders 427, respectively. In this way, the driving member 444 drives the screw 442 to rotate about the axis. Since the two engaging members 446 are connected to the screw 442 by two opposite external threads 4422, the two engaging members 446 can move towards or away from each other along the axis. Thus, the two first sliders 425 slides adjacent to or away from each other, thereby achieving the telescopic movement of the telescopic frame 42 in the vertical direction. Specifically, the driving member 444 can be a drive motor.

In another embodiment, the driving assembly 44 can also be drivingly connected to the bottom ends of the first connecting rod 421a and the second connecting rod 421b at the bottom of the telescopic frame 42, respectively, to drive them to move adjacent to or away from each other. In this way, under the driving of the driving assembly 44, the telescopic frame 42 can be stretched and compressed in the vertical direction.

It is understood that the screw 442 is parallel to the first plane and perpendicular to the vertical direction. That is to say, the screw 442 is parallel to the first rail 424 and the second rail 426.

In one of the embodiments, two telescopic frames 42 can be provided. The two telescopic frames 42 are correspondingly arranged on both sides of the driving assembly 44 and each drivingly connected to the driving assembly 44 for simultaneous stretching and compression by the driving assembly 44. In this way, the structure of the plant cultivating apparatus and the lifting process become more stable.

It should be noted that, in another embodiment, two driving assemblies can also be provided, which are drivingly connected to the bottom and top of the telescopic frame 42, respectively, to jointly drive the stretching and compression of the telescopic frame 42 in the vertical direction. In this case, the two driving assemblies need to be operated substantially synchronously, so that the top end and the bottom end of the telescopic frame 42 are subjected to a force, which is good for the improvement of the stability of stretching and compression of the telescopic frame 42. The structure of the two driving assemblies can be the same as that of the driving assemblies separately provided above, and will not be described here again.

To ensure structural integrity and functional stability of the telescopic frame 42, in one of the embodiments, the telescopic frame 42 further includes a first reinforcing rod 422a (see FIG. 4) and a second reinforcing rod 422b (see FIG. 4) at the top of the telescopic frame 42. The first reinforcing rod 422a is parallel to the first connecting rod 421a, and the second reinforcing rod 422b is parallel to the second connecting rod 421b. One end of the first reinforcing rod 422a and one end of the second reinforcing rod 422b are hinged to the first rail 424, and the first reinforcing rod 422a is hinged to the corresponding second connecting rod 421b. The second reinforcing rod 422b is hinged to the corresponding first connecting rod 421a.

Similarly, in the illustrated embodiment, the telescopic frame 42 further includes a third reinforcing rod 423a and a fourth reinforcing rod 423b at the top of the telescopic frame 42. The third reinforcing rod 423a is parallel to the first connecting rod 421a, and the fourth reinforcing rod 423b is parallel to the second connecting rod 421b. One end of the third reinforcing rod 423a and one end of the fourth reinforcing rod 423b are hinged to the first rail 424, and the third reinforcing rod 423a is hinged to the corresponding second connecting rod 421b. The fourth reinforcing rod 423b is hinged to the corresponding first connecting rod 421a.

It should be noted that the lifting structure 40 is not limited to the above-mentioned driving assembly 44 and telescopic frame 42, and other lifting structures 40 can be used, as long as the top structure 20 can be located and can be moved up or down relative to the bottom structure 30. For example, in another embodiments, the lifting structure 40 can be located between the top structure 20 and the bottom structure 30 using an electric lifting rod, and the technology of the electric lifting rod is mature and will not be described here.

## Claims

1. A plant cultivating apparatus, comprising:
an elastic housing (10) having an inner cavity (101), the elastic housing (10) being provided with first and second openings at upper and lower ends thereof in communication with the inner cavity (101);
a top structure (20) provided at the upper end of the elastic housing (10) to close the first opening;
a bottom structure (30) provided at the lower end of the elastic housing (10) to close the second opening and configured to hold a root of a plant; and
a lifting structure (40) provided between the top structure (20) and the bottom structure (30), the lifting structure (40) being capable of stretching and compressing in a vertical direction, thus driving the top structure (20) to move up or down with respect to the bottom structure (30).

2. The plant cultivating apparatus of claim 1, wherein the lifting structure (40) comprises a telescopic frame (42) located between the top structure (20) and the bottom structure (30) and a driving assembly (44) configured to drive the telescopic frame (42) to stretch and compress in the vertical direction.

3. The plant cultivating apparatus of claim 2, wherein the telescopic frame (42) comprises a plurality of first connecting rods (421a) and a plurality of second connecting rods (421b), the plurality of first connecting rods (421a) being parallel to and spaced apart with each other and located in a first plane, the plurality of second connecting rods (421b) being parallel to and spaced apart with each other and located in a second plane, each first connecting rod (421a) and each second connecting rod (421b) being intersected and hinged to each other.

4. The plant cultivating apparatus of claim 3, wherein top ends of the first connecting rod (421a) and the second connecting rod (421b) are movably connected to the top structure (20) and are capable of moving adjacent to or away from each other;
bottom ends of the first connecting rod (421a) and the second connecting rod (421b) are movably connected to the bottom structure (30) and are capable of moving adjacent to or away from each other;

5. The plant cultivating apparatus of claim 4, wherein the telescopic frame (42) further comprises a first rail (424) and two first sliders (425), the first rail (424) is provided on the top structure (20), two first sliders (425) are slidably located on the first rail (424), and the two first sliders (425) are hinged to the top ends of the first connecting rod (421a) and the second connecting rod (421b), respectively;
the telescopic frame (42) further comprises a second rail (426) and two second sliders, the second rail (426) is provided on the bottom structure (30), two second sliders are slidably located on the second rail (426), and the two second sliders are hinged to the bottom ends of the first connecting rod (421a) and the second connecting rod (421b), respectively;

6. The plant cultivating apparatus of claim 4, wherein the driving assembly (44) is connected to the top ends of the first connecting rod (421a) and the second connecting rod (421b) and capable of driving the first connecting rod (421a) and the second connecting rod (421b) to move adjacent to or away from each other; or the driving assembly (44) is connected to the bottom ends of the first connecting rod (421a) and the second connecting rod (421b) and capable of driving the first connecting rod (421a) and the second connecting rod (421b) to move adjacent to or away from each other.

7. The plant cultivating apparatus of claim 4, wherein one of the driving assemblies is connected to the top ends of the first connecting rod (421a) and the second connecting rod (421b) and capable of driving the first connecting rod (421a) and the second connecting rod (421b) to move adjacent to or away from each other; the other of the driving assemblies is connected to the bottom ends of the first connecting rod (421a) and the second connecting rod (421b) and capable of driving the first connecting rod (421a) and the second connecting rod (421b) to move adjacent to or away from each other.

8. The plant cultivating apparatus of claim 6, wherein the driving assembly (44) comprises:
a screw rotatably connected to the top structure (20), the screw being parallel to the first rail (424), the screw being provided with two external threads with opposite helical directions;
a driving member mounted on the top structure (20) and configured to drive the screw to rotate; and
two engaging members movably sleeved on the screw and engaged with the two external threads, respectively, and the two engaging members are fixed to the two first sliders (425), respectively.

9. The plant cultivating apparatus of claim 5, wherein the telescopic frame (42) further comprises a first reinforcing rod (422a) and a second reinforcing rod (422b), the first reinforcing rod (422a) being parallel to the first connecting rod (421a), and the second reinforcing rod (422b) being parallel to the second connecting rod (421b);
wherein one end of the first reinforcing rod (422a) and one end of the second reinforcing rod (422b) are hinged and connected to the first rail (424), the first reinforcing rod (422a) being intersected with and hinged to the corresponding second connecting rod (421b), and the second reinforcing rod (422b) being intersected with and hinged to the corresponding first connecting rod (421a).

10. The plant cultivating apparatus of claim 5, wherein the telescopic frame (42) further comprises a third reinforcing rod (423a) and a fourth reinforcing rod, the third reinforcing rod (423a) being parallel to the first connecting rod (421a), and the fourth reinforcing rod (423b) being parallel to the second connecting rod (421b);
wherein one end of the third reinforcing rod (423a) and one end of the fourth reinforcing rod (423b) are hinged and connected to the second rail (426), the third reinforcing rod (423a) being intersected with and hinged to the corresponding second connecting rod (421b), and the fourth reinforcing rod (423b) being intersected with and hinged to the corresponding first connecting rod (421a).

11. The plant cultivating apparatus of any one of the preceding claims, wherein the top structure (20) comprises:
a main body portion (22) provided at the upper end of the elastic housing (10);
a distance sensor provided at a side of the main body portion (22) facing the bottom structure (30) and configured to detect a distance between the plant and the main body portion (22); and a control unit electrically coupled to the distance sensor and the lifting structure (40), respectively, and configured to control the lifting structure (40) to stretch and compress according to the distance detected by the distance sensor.

12. The plant cultivating apparatus of claim 11 wherein the top structure (20) further comprises a lamp (24) located on a side of the main body portion (22) facing the bottom structure (30), the lamp (24) being configured to provide light to the plant.

13. The plant cultivating apparatus of any one of the preceding claims, wherein the elastic housing (10) extends vertical along a wavy line or a fold line in the vertical direction.

14. The plant cultivating apparatus of any one of the preceding claims, wherein the elastic housing (10) comprises a plurality of sliding sleeves (12) that are sleeved successively, and two adjacent sliding sleeves being slidably connected to each other in the vertical direction, an innermost sliding sleeve (12) is fixed to one of the top structure (20) and the bottom structure (30), and an outermost sliding sleeve (12) is fixed to the other one of the top structure (20) and the bottom structure (30).

15. The plant cultivating apparatus of any one of the preceding claims, further comprising a first mounting flange (11a) on the first opening, the first mounting flange (11a) being detachably fastened to the top structure (20).
